# EUROPEAN PATENT SPECIFICATION

(11) **EP 4 082 830 B1**
(45) Date of publication and mention of the grant of the patent: **01.04.2026**
(21) Application number: 20906547.3
(22) Date of filing: 24.02.2020
(51) Int. Cl.: B60N 2/225, F16H 1/20, F16H 57/12

(54) **RECLINER FOR CONCENTRICALLY ADJUSTING SEAT**
KONZENTRISCH NEIGUNGSVERSTELLBARER SITZ
MÉCANISME D'INCLINAISON POUR RÉGLER UN SIÈGE DE MANIÈRE CONCENTRIQUE

(30) Priority: 23.12.2019 CN 201911335744; 23.12.2019 CN 201922325790 U
(43) Date of publication of application: 02.11.2022
(73) Proprietor: KEIPER Seating Mechanisms Co., Ltd., Shanghai, 201315 (CN)
(72) Inventor: WANG, Qiliang, Shanghai 201315 (CN); LI, Cong, Shanghai 201315 (CN); QIAO, Ping, Shanghai 201315 (CN)
(74) Representative: Grauel, Andreas
(86) International application number: PCT/CN2020/076418
(87) International publication number: WO 2021/128560

(56) References cited:
- EP-A2- 1 731 353
- CN-B- 1 019 780
- CN-B- 1 019 780
- US-A- 4 371 207
- US-A- 5 277 672
- US-A- 5 536 217
- US-A- 5 536 217
- US-A1- 2006 084 547
- US-A1- 2006 084 547

## Description

### BACKGROUND OF THE INVENTION

### 1. Field of the Invention

The present invention relates to a vehicle seat, and more particularly to a recliner for concentrically adjusting a seat.

### 2. Related Art

The recliner is a device installed on the vehicle seat to adjust the angle of the backrest. The device generally comprises a backrest connecting plate, a seat basin connecting plate, a core piece, a hand wheel or adjusting handle, a return spring, etc. With the rapid development of new energy vehicles, people's demand for electrification and automation of vehicle seats is getting higher and higher.

At present, an eccentric structure is disposed on most of the electric recliner for the universal vehicle seat on the market. When the backrest is adjusted, it does not make a concentric rotation movement around an axis, but make an eccentric rotation movement with an eccentricity. Due to the eccentricity, during the process of movement, there is not only back and forth displacement in the horizontal direction, but also up and down displacement in the vertical direction, resulting in a wave-like movement of the backrest. Problems such as jitter, abnormal noise, etc are easily caused, not meeting the requirement of the recliner for fast and stable adjustment, thereby affecting customer experience. In addition, the problem of block point jamming is easily caused by the eccentric adjustment. Therefore, the block point of the recliner of eccentric adjustment needs to be inspected. However, even if the block point is manually inspected, the problem cannot be 100 percent avoided. In the prior art, there is also the recliner with a concentric structure. But on the one hand, it has a large number of parts, a complex structure and a large volume. On the other hand, although the problems such as jitter and block point jamming can be solved by the concentric recliner in the prior art, the gap between the internal gear and the toothed plate of the recliner cannot be eliminated. Due to the gap, an obvious backrest shaking is caused when the passenger is leaning on the backrest. The abnormal noise is also caused by the gap under no-load, which will cause serious comfort problems and affect the user's riding experience.

Document US 5 277 672 A discloses a recliner according to the preamble of claim 1. Document US 2006/084547 A1 discloses another geared fitting for a vehicle seat comprising a first internal geared wheel, a second internal geared wheel, and a wedge system.

### SUMMARY OF THE INVENTION

The invention provides a recliner for concentrically adjusting a seat, wherein the shaking, abnormal noise, block point jamming and gap between the internal gear and the toothed plate can be eliminated during fast and stable adjustment.

The present invention provides a recliner for concentrically adjusting a seat, comprising the technical features set forth in claim 1.

The recliner further comprises a sleeve installed between the central shaft hole of the gear and the gap eliminating mechanism.

The central shaft holes of the two toothed plates are both flanging holes.

The two toothed plates are provided with counterbores at the plane adjacent to the inner side of the outer circumference and connected with toothing.

The central shaft hole of the gear is provided with a double-sided flange supporting an outer edge of the sleeve.

The tooth count ratio of the two toothed plates and the gear is: one toothed plate: gear: the other toothed plate = n+1: n: n+2, wherein n is a positive integer.

According to an embodiment of the present invention, the tooth count ratio of the two toothed plates and the gear is: one toothed plate: gear: the other toothed plate=43:42:44.

According to another embodiment of the present invention, the tooth count ratio of the two toothed plates and the gear is: one toothed plate: gear: the other toothed plate=37:36:38.

According to yet another embodiment of the present invention, the tooth count ratio of the two toothed plates and the gear is: one toothed plate: gear: the other toothed plate=33:32:34.

The gap eliminating mechanism comprises a cam and two sets of wedge mechanisms respectively located on upper and lower sides of the cam.

Each set of wedge mechanism includes two sector blocks and a spring connected therebetween.

The cam comprises a cam ring, and a camshaft is arranged in the middle of the cam ring.

A drive rod interface is provided in the camshaft.

The camshaft and the cam ring are integrally formed or combined from two pieces.

The present invention provides a recliner for concentrically adjusting a seat, wherein two sets of gear-toothed plate matching mechanisms are formed by two toothed plates meshing with a gear, such that an output end of the recliner rotates concentrically, thereby ensuring the concentric adjustment of the backrest, avoiding the problems of shaking, blocking point jamming and noise brought about during the eccentric operation of the recliner, and meeting the requirement of the recliner for fast and stable adjustment. At the same time, a gap adjusting mechanism matching two sets of gears-toothed plates is used in the present invention, such that a gap in the recliner is eliminated, and the riding comfort is improved. In addition, the structure and part configuration of the recliner of the present invention is simple, and a machining process therefore is easy to implement, such that the recliner has better application prospects.

### BRIEF DESCRIPTION OF THE DRAWINGS

FIG. 1 is an exploded view of a recliner for concentrically adjusting a seat according to the present invention.
FIG. 2 is a cross-sectional view taken along the line A-A of FIG. 1.
FIG. 3 is a structural view of the low strength recliner without a flange according to the present invention.
FIG. 4 is a structural view of the low strength recliner provided with a flange according to the present invention.
FIG. 5 is an exploded view of the gap eliminating mechanism according to the present invention.
FIG. 6 is a view of the integrated cam structure according to the present invention.
FIG. 7 is a view of the combined cam structure according to the present invention.
FIG. 8 is a working view of the wedge mechanism according to the present invention.
FIG. 9 is a schematic view of the recliner for the seat to provide concentric adjustment according to the present invention.
FIG. 10 is a cross-sectional view taken along the line B-B of FIG. 9.

### DESCRIPTION OF THE ENABLING EMBODIMENT

The present invention will be further described below with reference to the accompanying drawings and embodiments. It should be understood that the following embodiments are only for illustration and are not intended to limit the scope of the present invention.

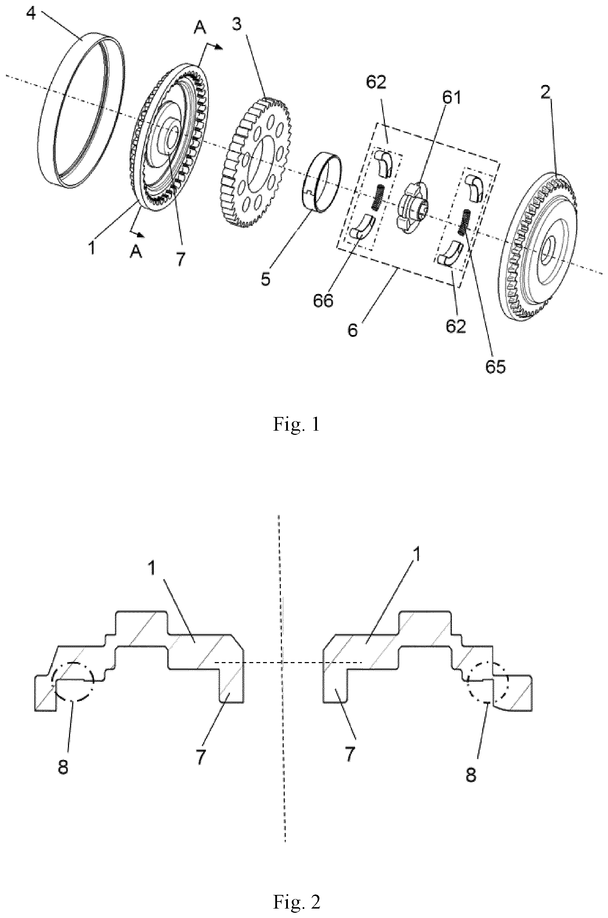

As shown in FIG. 1, the recliner for concentrically adjusting a seat provided by the present invention comprises a first toothed plate 1 connected to the backrest and a second toothed plate 2 connected to the seat basin. The structure of the first toothed plate 1 is similar to the second toothed plate 2, and they are interchangeable. Namely the first toothed plate 1 is connected to the seat basin, and the second toothed plate 2 is connected to the backrest. The first toothed plate 1 and the second toothed plate 2 respectively mesh with a gear 3 located therebetween from two sides, to form two sets of gear-toothed plate matching mechanisms. A sleeve 5 is closely disposed in a central shaft hole of the gear 3. A gap eliminating mechanism 6 is accommodated inside the sleeve 5. The peripheries of the first toothed plate 1 and the second toothed plate 2 are fixedly connected together by means of a hoop 4.

As shown in FIG. 2, the central shaft hole of the first toothed plate 1 is a flanging hole 7 for cooperating with the gap eliminating mechanism 6. In addition, the first toothed plate 1 is provided with counterbores 8 at the plane adjacent to the inner side of the outer circumference and connected with toothing. The toothing of the gear 3 and the toothing of the first toothed plate 1 are continuously meshed during the process of operation of the recliner. The interference at the root between the toothing of the gear 3 and the toothing of the first toothed plate 1 can be avoided by the counterbores 8, such that the noise affecting function and comfort caused by wear is avoided. At the same time, the grease filled into the recliner can be stored in the counterbores 8 to provide enough lubricating oil when the gear 3 meshes with the first toothed plate 1. Similarly, the second toothed plate 2 is also provided with the same flanging hole 7 and counterbores 8, which will not be repeated here.

The tooth count ratio of the first toothed plate 1, the gear 3 and the second toothed plate 2 of the present invention is n+1: n: n+2, wherein n is a positive integer. This design can ensure that a tooth count difference between the gear 3, the first toothed plate 1 and the second toothed plate 2 is the smallest. The smaller the tooth count difference, the more the tooth count meshed at the same time, the stronger the carrying capacity, and the more stable transmission. A larger transmission ratio can be obtained, while a smaller volume and weight can be obtained.

When n is different, the maximum external force that the recliner can withstand is different. Namely different values of n correspond to recliners of different strengths. For example, for the high strength of 5000Nm, the tooth count ratio of the first toothed plate 1, the gear 3, and the second toothed plate 2 can be 43:42:44; for the medium strength of 2500-3000Nm, the tooth count ratio of the first toothed plate 1, the gear 3, and the second toothed plate 2 can be 37:36:38; and for the low strength of 2000Nm, the tooth count ratio of the first toothed plate 1, the gear 3, and the second toothed plate 2 can be 33:32:34.

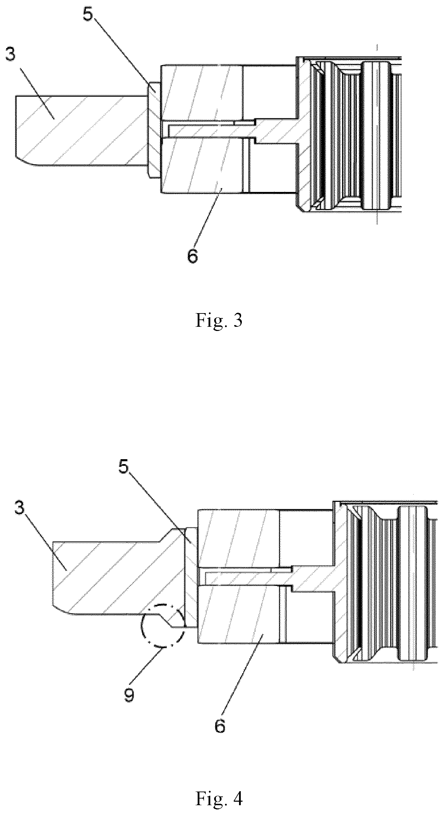

For the low strength recliner, the thickness of gear 3 can be designed to be thinner than that of high strength recliner. However, in order to maximize error prevention and reduce costs, the sleeve 5 and gap eliminating mechanism 6 are still compatible and shared with high strength recliner. As shown in FIG. 3, when the thin gear 3 is matched with the sleeve 5, the two ends of the sleeve 5 will expose in the air without support, which is easy to be deformed by force. Therefore, when the recliner of the present invention is a low strength recliner, as shown in FIG. 4, the central shaft hole of the gear 3 is provided with a double-sided flange 9. The flange 9 can better support the sleeve 5 in an even form, in order to ensure the relative stability of the sleeve 5. Therefore, the deformation and damage of the sleeve 5 due to the uneven forces on the upper and lower ends can be avoided.

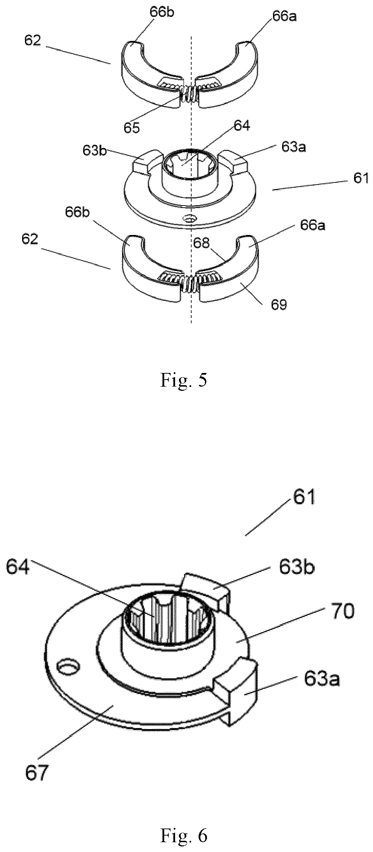

As shown in FIG. 5, the gap eliminating mechanism 6 comprises a cam 61 and two sets of wedge mechanisms 62. The two sets of wedge mechanisms 62 are respectively located on upper and lower sides of the cam 61. The cam 61 is provided with spaced cam blocks 63a, 63b cooperating with the wedge mechanisms 62 for stopping. Each set of wedge mechanism 62 includes two sector blocks 66a, 66b and a spring 65 connected therebetween, wherein the spring 65 provides a force for the gap eliminating mechanism 6. The cam 61 is also provided with a drive rod interface 64 for connecting to a drive motor (not shown).

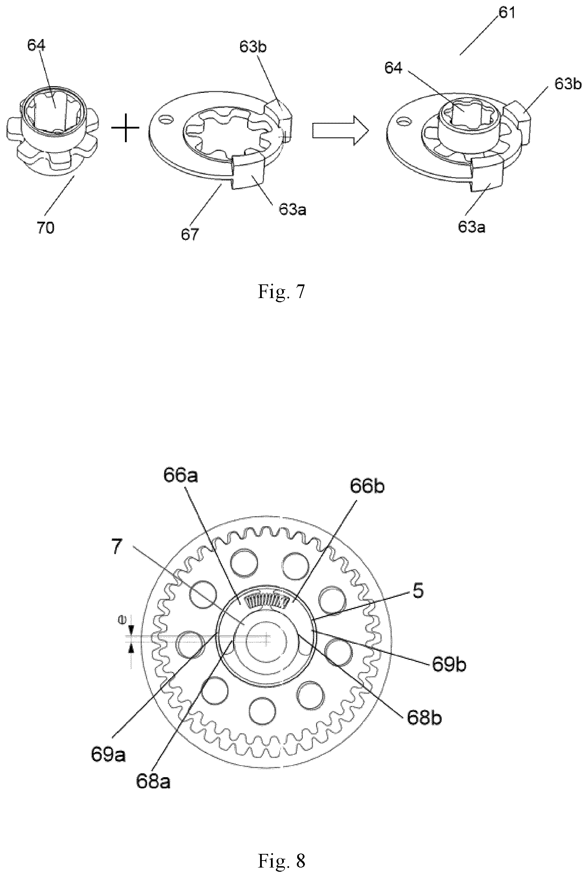

The cam 61 comprises a camshaft 70 and a cam ring 67. As shown in FIG. 6, the camshaft 70 and the cam ring 67 may be integrally formed. The integrated cam is a powder metallurgy component as a whole, with a high carrying capacity but relative increased weight. The camshaft 70 and the cam ring 67 can also be combined from two pieces. As shown in FIG. 7, the two pieces are made of different materials (for example, the camshaft 70 is a polymer plastic component, and the cam ring 67 is a powder metallurgy component) to reduce the cost and weight. In actual use, different structures can be selected according to the specific stress conditions.

In a preferred embodiment, the drive rod interface 64 is a pattern interface matched to the existing hexagonal synchronization rod, and the pattern interface has no installation angle requirement. In other embodiments, the interface is determined according to the torque value to be transmitted, and different designs can be selected as required.

Referring back to FIG. 1, the first toothed plate 1 and the second toothed plate 2 of the present invention are coaxially with the cam 61, and the gear 3 and the sleeve 5 are coaxially, so that a two-stage structure is formed, wherein one is formed by the first toothed plate 1 and the gear 3, and the other is formed by the second toothed plate 2 and the gear 3. The cam 61 of the gap eliminating mechanism 6 separates the two sets of wedge mechanisms 62. When at rest, the sector blocks 66a, 66b of the two sets of wedge mechanisms 62 are pushed away from each other under the action of the spring 65, such that the two sets of wedge mechanisms 62 are respectively matched to above-mentioned two-stage eccentric structures, in order to achieve the purpose of eliminating the gap of the two sets of gear-toothed plate mechanisms.

As shown in FIG. 8, the sector block 66a has an inner working surface 68a and an outer working surface 69a. The sector block 66b has an inner working surface 68b and an outer working surface 69b. The inner and outer working surfaces are eccentrically, and the eccentricity is e. During operation, the outer working surfaces 69a, 69b rotate along the inner surface of the sleeve 5, and the inner working surfaces 68a, 68b rotate against the outer wall of the toothed plate flanging hole 7. When the recliner is under load, the pressure between the sector blocks 66a, 66b and the outer wall of the flanging hole 7 will increase, and the sliding friction will increase accordingly. In order to reduce the friction loss and ensure the smoothness of the drive, the surface roughness, roundness and perpendicularity of the flanging hole 7 have strict requirements. In addition, when a vehicle collision occurs, the recliner will bear a huge external force, and the external force will be partially transmitted to the flanging hole 7. Therefore, sufficient strength must be considered when designing the flanging hole to ensure the locking strength of the recliner under collision conditions.

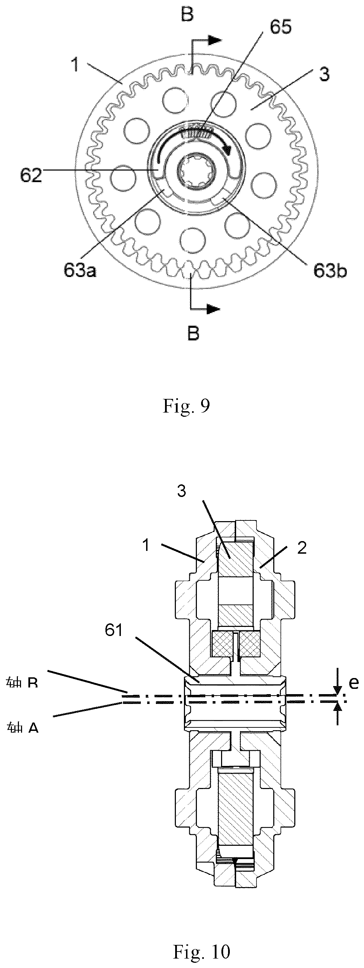

The principle of the recliner for concentrically adjusting the seat of the present invention is shown in FIGS. 9-10. The first toothed plate 1 rotating around the axis A is connected to the backrest, forming the output end of the recliner. The second toothed plate 2 is connected to the seat basin, forming the fixed end of the recliner. When the motor works, the cam 61 is driven to rotate. One of the wedge mechanisms starts to rotate under the action of the cam 61 and the spring 65 is compressed. When the spring force is sufficient to overcome the frictional force of the other wedge mechanism, the two wedge mechanisms 62 and the spring 65 will be driven by the cam 61 to rotate in the same direction synchronously. When the wedge mechanism 62 rotates, the gear 3 is driven to make an eccentric movement with an eccentricity of e. That is to say, driven by the wedge mechanism 62, the central axis B of the gear 3 always rotates around the axis A with a radius e. At the same time, the gear 3 also rotates around its own central axis B under the action of tooth mesh. Since the first toothed plate 1 is movable and the second toothed plate 2 is fixed, when the gear 3 makes an eccentric movement, the tooth mesh will drive the first toothed plate 1 to rotate. Since the first toothed plate 1 can only be rotated around the axis A, the movement of the first toothed plate 1 will be concentric rotation. And since the first toothed plate is connected to the backrest, the concentric adjustment of the backrest is realized.

The above are only preferred embodiments of the present invention and are not used to limit the scope of the present invention. Various changes can be made to the above-mentioned embodiments of the present invention. That is to say, all simple and equivalent changes and modifications made in accordance with the claims of the present invention and the contents of the specification fall into the protection scope of the patent of the present invention. What is not described in detail in the present invention is conventional technical content.

## Claims

1. A recliner for concentrically adjusting a seat, comprising two toothed plates (1, 2) which are respectively adapted to be connected to a backrest and a seat basin, wherein the two toothed plates (1, 2) respectively mesh with a gear (3) located therebetween from two sides; a gap eliminating mechanism (6) is accommodated inside a central shaft hole (7) of the gear (3); and the peripheries of the two toothed plates (1, 2) are fixedly connected together by means of a hoop (4), **characterized in that** the tooth count ratio of the two toothed plates (1, 2) and the gear (3) is: one toothed plate (1, 2): gear (3): the other toothed plate (2, 1) = n+1: n: n+2, wherein n is a positive integer.

2. The recliner for the seat according to claim 1, wherein the recliner further comprises a sleeve (5) installed between the central shaft hole (7) of the gear (3) and the gap eliminating mechanism (6).

3. The recliner for the seat according to claim 1, wherein the central shaft holes (7) of the two toothed plates (1, 2) are both flanging holes.

4. The recliner for the seat according to claim 1 or 3, wherein the two toothed plates (1, 2) are provided with counterbores (8) at the plane adjacent to the inner side of the outer circumference and connected with toothing.

5. The recliner for the seat according to claim 2, wherein the central shaft hole (7) of the gear (3) is provided with a double-sided flange supporting an outer edge of the sleeve.

6. The recliner for the seat according to claims 1 to 5, wherein the tooth count ratio of the two toothed plates (1, 2) and the gear (3) is: one toothed plate (1, 2): gear (3): the other toothed plate (2, 1) = 43:42:44.

7. The recliner for the seat according to claims 1 to 6, wherein the tooth count ratio of the two toothed plates (1, 2) and the gear (3) is: one toothed plate (1, 2): gear (3): the other toothed plate (2, 1) = 37:36:38.

8. The recliner for the seat according to claims 1 to 7, wherein the tooth count ratio of the two toothed plates (1, 2) and the gear (3) is: one toothed plate (1, 2): gear (3): the other toothed plate (2, 1) = 33:32:34.

9. The recliner for the seat according to claim 1, wherein the gap eliminating mechanism (6) comprises a cam (61) and two sets of wedge mechanisms (62) respectively located on upper and lower sides of the cam (61).

10. The recliner for the seat according to claim 9, wherein each set of wedge mechanism (62) includes two sector blocks (63a, 63b, 66a, 66b) and a spring (65) connected therebetween.

11. The recliner for the seat according to claim 9, wherein the cam (61) comprises a cam ring (67), and a camshaft (70) is arranged in the middle of the cam ring (67).

12. The recliner for the seat according to claim 11, wherein a drive rod interface (64) is provided in the camshaft (70).

13. The recliner for the seat according to claim 11, wherein the camshaft (70) and the cam ring (67) are integrally formed or combined from two pieces.

## Patentansprüche

1. Liege zum konzentrischen Verstellen eines Sitzes, umfassend zwei Zahnplatten (1, 2), die jeweils dazu ausgelegt sind, mit einer Rückenlehne und einer Sitzwanne verbunden zu sein, wobei die zwei Zahnplatten (1, 2) jeweils mit einem Getriebe (3), das sich dazwischen befindet, von zwei Seiten kämmen; ein Spaltbeseitigungsmechanismus (6) innerhalb eines zentralen Wellenlochs (7) des Getriebes (3) untergebracht ist und die Ränder der zwei Zahnplatten (1, 2) fest mittels eines Reifens (4) miteinander verbunden sind, **dadurch gekennzeichnet, dass** das Zahnzahlverhältnis der zwei Zahnplatten (1, 2) und des Getriebes (3) wie folgt ist: eine Zahnplatte (1, 2): Getriebe (3): die andere Zahnplatte (2, 1) = n+1: n: n+2, wobei n eine positive ganze Zahl ist.

2. Liege für den Sitz nach Anspruch 1, wobei die Liege ferner eine Hülse (5) umfasst, die zwischen dem zentralen Wellenloch (7) des Getriebes (3) und dem Spaltbeseitigungsmechanismus (6) installiert ist.

3. Liege für den Sitz nach Anspruch 1, wobei die zentralen Wellenlöcher (7) der zwei Zahnplatten (1, 2) beide Flanschlöcher sind.

4. Liege für den Sitz nach Anspruch 1 oder 3, wobei die zwei Zahnplatten (1, 2) mit Gegenbohrungen (8) auf der Ebene benachbart zu der Innenseite des Außenumfangs bereitgestellt und mit Verzahnung verbunden sind.

5. Liege für den Sitz nach Anspruch 2, wobei das zentrale Wellenloch (7) des Getriebes (3) mit einem doppelseitigen Flansch, der eine Außenkante der Hülse stützt, bereitgestellt ist.

6. Liege für den Sitz nach Anspruch 1 bis 5, wobei das Zahnzahlverhältnis der zwei Zahnplatten (1, 2) und des Getriebes (3) wie folgt ist: eine Zahnplatte (1, 2): Getriebe (3): die andere Zahnplatte (2, 1) = 43:42:44.

7. Liege für den Sitz nach Anspruch 1 bis 6, wobei das Zahnzahlverhältnis der zwei Zahnplatten (1, 2) und des Getriebes (3) wie folgt ist: eine Zahnplatte (1, 2): Getriebe (3): die andere Zahnplatte (2, 1) = 37:36:38.

8. Liege für den Sitz nach Anspruch 1 bis 7, wobei das Zahnzahlverhältnis der zwei Zahnplatten (1, 2) und des Getriebes (3) wie folgt ist: eine Zahnplatte (1, 2): Getriebe (3): die andere Zahnplatte (2, 1) = 33:32:34.

9. Liege für den Sitz nach Anspruch 1, wobei der Spaltbeseitigungsmechanismus (6) eine Nocke (61) umfasst und sich zwei Sätze von Keilmechanismen (62) jeweils auf oberen und unteren Seiten der Nocke (61) befinden.

10. Liege für den Sitz nach Anspruch 9, wobei jeder Satz von Keilmechanismus (62) zwei Sektorblöcke (63a, 63b, 66a, 66b) und eine Feder (65), die dazwischen verbunden ist, beinhaltet.

11. Liege für den Sitz nach Anspruch 9, wobei die Nocke (61) einen Nockenring (67) umfasst und eine Nockenwelle (70) in der Mitte des Nockenrings (67) angeordnet ist.

12. Liege für den Sitz nach Anspruch 11, wobei eine Antriebsstangenschnittstelle (64) in der Nockenwelle (70) bereitgestellt ist.

13. Liege für den Sitz nach Anspruch 11, wobei die Nockenwelle (70) und der Nockenring (67) einstückig gebildet oder aus zwei Stücken kombiniert sind.

## Revendications

1. Mécanisme d'inclinaison pour régler un siège de manière concentrique, ledit mécanisme d'inclinaison comprenant deux plaques dentées (1, 2) qui sont respectivement adaptées pour être reliées à un dossier et à une assise de siège, mécanisme d'inclinaison dans lequel les deux plaques dentées (1, 2) s'engrènent respectivement, de deux côtés, avec un engrenage (3) situé entre lesdites plaques dentées ; un mécanisme d'élimination d'espace (6) est logé à l'intérieur d'un trou d'arbre central (7) de l'engrenage (3) ; et les périphéries des deux plaques dentées (1, 2) sont reliées ensemble, fixement, au moyen d'un cerceau (4), **caractérisé en ce que** le rapport du nombre de dents des deux plaques dentées (1, 2) et de l'engrenage (3) est : une plaque dentée (1, 2) : l'engrenage (3) : l'autre plaque dentée (2, 1) = n+1 : n : n+2, mécanisme d'inclinaison dans lequel n est un nombre entier positif.

2. Mécanisme d'inclinaison pour le siège selon la revendication 1, où le mécanisme d'inclinaison comprend en outre un manchon (5) installé entre le trou d'arbre central (7) de l'engrenage (3) et le mécanisme d'élimination d'espace (6).

3. Mécanisme d'inclinaison pour le siège selon la revendication 1, mécanisme d'inclinaison dans lequel les trous d'arbre central (7) des deux plaques dentées (1, 2) sont tous les deux des trous à bord tombé.

4. Mécanisme d'inclinaison pour le siège selon la revendication 1 ou 3, mécanisme d'inclinaison dans lequel les deux plaques dentées (1, 2) sont dotées de contre-perçages (8) au niveau du plan adjacent au côté intérieur de la circonférence extérieure et sont reliées par des dentures.

5. Mécanisme d'inclinaison pour le siège selon la revendication 2, mécanisme d'inclinaison dans lequel le trou d'arbre central (7) de l'engrenage (3) est doté d'une bride double face supportant un bord extérieur du manchon.

6. Mécanisme d'inclinaison pour le siège selon l'une quelconque des revendications 1 à 5, mécanisme d'inclinaison dans lequel le rapport du nombre de dents des deux plaques dentées (1, 2) et de l'engrenage (3) est : une plaque dentée (1, 2) : l'engrenage (3) : l'autre plaque dentée (2, 1) = 43:42:44.

7. Mécanisme d'inclinaison pour le siège selon l'une quelconque des revendications 1 à 6, mécanisme d'inclinaison dans lequel le rapport du nombre de dents des deux plaques dentées (1, 2) et de l'engrenage (3) est : une plaque dentée (1, 2) : l'engrenage (3) : l'autre plaque dentée (2, 1) = 37:36:38.

8. Mécanisme d'inclinaison pour le siège selon l'une quelconque des revendications 1 à 7, mécanisme d'inclinaison dans lequel le rapport du nombre de dents des deux plaques dentées (1, 2) et de l'engrenage (3) est : une plaque dentée (1, 2) : l'engrenage (3) : l'autre plaque dentée (2, 1) = 33:32:34.

9. Mécanisme d'inclinaison pour le siège selon la revendication 1, mécanisme d'inclinaison dans lequel le mécanisme d'élimination d'espace (6) comprend une came (61) et deux ensembles de mécanismes de coin (62) respectivement situés sur des côtés supérieur et inférieur de la came (61).

10. Mécanisme d'inclinaison pour le siège selon la revendication 9, mécanisme d'inclinaison dans lequel chaque ensemble de mécanisme de coin (62) comprend deux blocs sectoriels (63a, 63b, 66a, 66b) et un ressort (65) relié entre eux.

11. Mécanisme d'inclinaison pour le siège selon la revendication 9, mécanisme d'inclinaison dans lequel la came (61) comprend un anneau de came (67), et un arbre à came (70) est disposé au milieu de l'anneau de came (67).

12. Mécanisme d'inclinaison pour le siège selon la revendication 11, mécanisme d'inclinaison dans lequel une interface de tige d'entraînement (64) est prévue dans l'arbre à came (70).

13. Mécanisme d'inclinaison pour le siège selon la revendication 11, mécanisme d'inclinaison dans lequel l'arbre à came (70) et l'anneau de came (67) sont intégralement formés ou combinés à partir de deux pièces.
